# FASCICULE DE BREVET EUROPEEN

(11) **EP 2 878 841 B1**
(45) Date de publication et mention de la délivrance du brevet: **22.11.2017**
(21) Numéro de dépôt: 14160587.3
(22) Date de dépôt: 18.03.2014
(51) Int. Cl.: F16C 33/54, F16C 33/46, F16C 19/36

(54) **Cage de rétention de corps roulants dans un palier à roulement**
Rückhaltekäfig von Rollkörpern in einem Wälzlager
Cage for retaining rolling bodies in a roller bearing

(30) Priorité: 28.11.2013 FR 1361806
(43) Date de publication de la demande: 03.06.2015
(73) Titulaire: NTN-SNR Roulements, 74010 Annecy (FR)
(72) Inventeur: Azam, Guy, 73100 Pugny-Chatenrod (FR)
(74) Mandataire: Sayettat, Julien Christian

(56) Documents cités:
- WO-A1-2013/052822
- DE-A1- 3 136 013
- GB-A- 1 206 476
- US-A- 2 294 289
- US-A1- 2011 142 389

## Description

L'invention concerne une cage de rétention de corps roulants dans un palier à roulement, ainsi qu'un tel palier comprenant une bague extérieure et une bague intérieure pourvues chacune d'une piste annulaire de roulement entre lesquelles des corps roulants sont retenus au moyen d'une telle cage de sorte à permettre la rotation relative desdites bagues autour d'un axe. WO2013/052822 A1 divulgue une cage avec ponts ayant une section en U, dont le but est d'éviter une interférence des ponts de la cage avec les rouleaux d'un palier.

On connaît de nombreuses géométries de cages, notamment obtenues par emboutissage d'une tôle métallique ou par moulage d'une matière thermoplastique, présentant deux couronnes espacées axialement et entre lesquelles s'étend une pluralité de ponts de sorte à former entre deux ponts adjacents et un segment de chacune desdites couronnes un cadre périphérique sur lequel un corps roulant est retenu en pouvant tourner autour de son axe propre.

Dans certaines applications, le palier présente une géométrie qui nécessite une déformation de la cage afin de pouvoir disposer les corps roulants sur les cadres périphériques dans l'espace de roulement. Toutefois le manque d'élasticité de certains types de cage, notamment celles réalisées en tôle métallique, induit un risque d'amorce de rupture de ladite cage lors de son montage, risque d'autant plus important que la cage est massive pour mieux résister aux contraintes mécaniques subies lors de l'utilisation du palier.

En particulier, pour les paliers à roulement de type conique dit inversé dans lequel un collet est formé sur un côté de la piste de roulement conique de la bague extérieure, il est souhaitable de déformer élastiquement la cage pour pouvoir monter les rouleaux coniques sur les cadres périphériques après disposition desdits rouleaux à l'intérieur de ladite piste de roulement extérieure.

L'invention vise à perfectionner l'art antérieur en proposant notamment une cage de rétention offrant un bon compromis entre poids, élasticité et résistance mécanique, en particulier pour faciliter l'assemblage d'un palier à roulement conique dont la bague extérieure est équipée d'un collet.

A cet effet, selon un premier aspect, l'invention propose une cage de rétention de corps roulants selon la revendication 1. Selon un deuxième aspect, l'invention propose un palier à roulement comprenant une bague extérieure et une bague intérieure pourvues chacune d'une piste annulaire de roulement entre lesquelles sont disposés des corps roulants de sorte à permettre la rotation relative desdites bagues autour d'un axe, chaque corps roulants étant retenus sur un cadre périphérique d'une telle cage de rétention.

D'autres objets et avantages de l'invention apparaîtront dans la description qui suit, faite en référence aux figures jointes, dans lesquelles :
- la figure 1 est une représentation partielle en coupe longitudinale d'un palier à roulement selon un mode de réalisation de l'invention ;
- les figures 2 sont des représentations d'une cage de rétention selon un mode de réalisation de l'invention, respectivement en perspective (figure 2a) et en vue avant (figure 2b) ;
- la figure 3 est une vue partielle en coupe montrant la disposition de corps roulants entre une bague extérieure et la cage selon les figures 2.

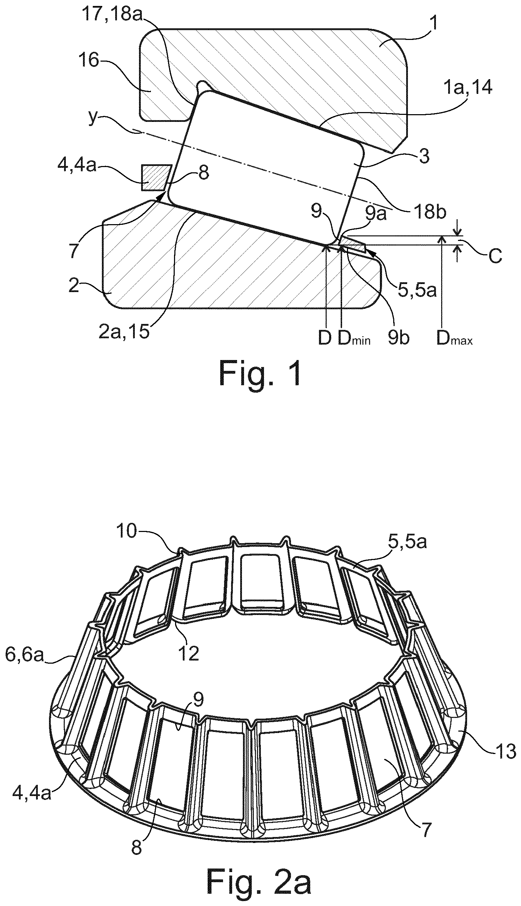

En relation avec la figure 1, on décrit ci-dessous un palier à roulement comprenant une bague extérieure 1 et une bague intérieure 2 qui sont pourvues chacune d'une piste annulaire 1a, 2a de roulement, lesdites pistes étant espacées entre elles pour former un espace de roulement dans lequel sont disposés des corps roulants 3 pour permettre la rotation relative desdites bagues autour d'un axe.

Dans la description, les termes « extérieur » et « intérieur » sont définis par rapport à l'axe de rotation du palier, respectivement pour une localisation éloignée et proche dudit axe. Les termes « axial » et « radial » sont également définis par rapport à l'axe, respectivement pour une direction suivant cet axe et s'éloignant ou se rapprochant de lui.

Le palier comprend une cage de rétention qui est agencée pour assurer, notamment lors de la rotation du palier, le maintien des corps roulants 3 dans l'espace de roulement, en permettant la rotation desdits corps sur les pistes de roulement 1a, 2a des bagues 1, 2, et ce en empêchant tout contact entre lesdits corps roulants afin de ne pas contraindre leur rotation respective.

Pour ce faire, la cage de rétention présente une couronne extérieure 4 et une couronne intérieure 5 espacées axialement, ainsi qu'une pluralité de ponts 6 répartis circonférentiellement en s'étendant axialement entre lesdites couronnes de sorte à former, de part et d'autre de chaque pont 6, un cadre périphérique 7 sur lequel un corps roulant 3 est retenu en pouvant tourner autour de son axe propre Y.

En particulier, chaque cadre périphérique 7 est délimité circonférentiellement par deux ponts 6 adjacents et axialement par un segment 4a, 5a de chacune des couronnes 4, 5 qui s'étend entre les extrémités desdits ponts pour permettre la rétention d'un corps roulant 3 sur ledit cadre par interaction géométrique.

La géométrie des cadres 7 peut être agencée pour pouvoir disposer les corps roulants 3 en appui circonférentiel de part et d'autre sur respectivement une face latérale d'un pont 6, les faces latérales pouvant présenter un profil de géométrie complémentaire à celle de la périphérie desdits corps roulants pour faciliter leur roulement sur lesdites faces. En outre, chaque segment 4a, 5a comprend une face interne 8, 9 qui est disposée en regard axial de la périphérie d'un corps roulant 3, les faces internes 8, 9 pouvant présenter un profil de géométrie complémentaire à celle de la périphérie dudit corps roulant pour faciliter le roulement dudit corps roulant sur lesdites faces internes.

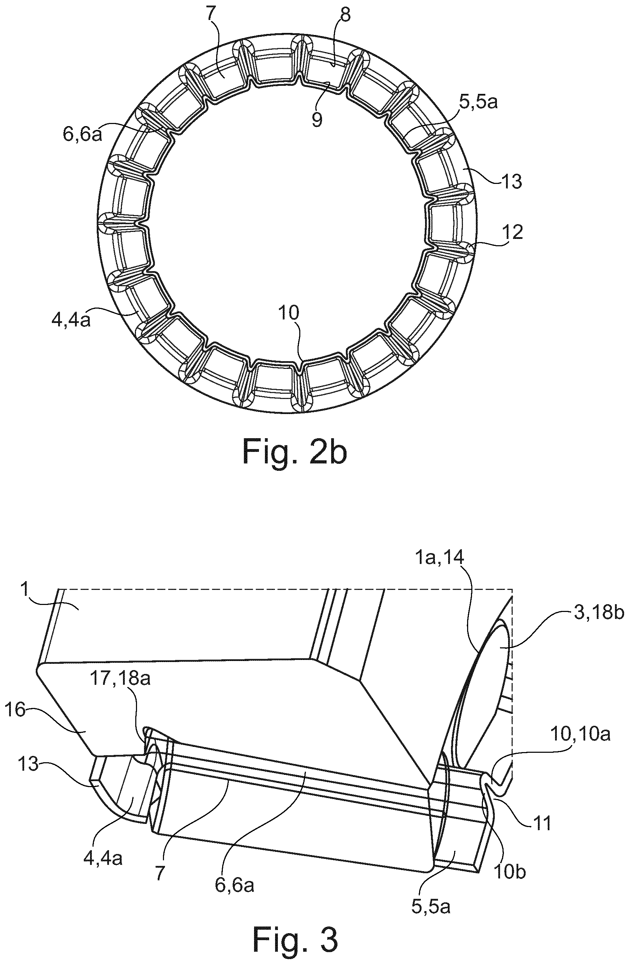

En relation avec les figures 2 et 3, on décrit ci-dessous un mode de réalisation d'une cage de rétention dans laquelle les ponts 6 sont au moins partiellement nervurés, en présentant chacun une section en U au moins au niveau de leur extrémité intérieure qui relie lesdits ponts à la couronne intérieure 5.

La couronne intérieure 5 est ainsi formée d'une succession de segments 5a qui sont reliés par des jonctions 10 en U afin de conférer à la cage une élasticité autorisant sa déformation réversible au moins au niveau de sa couronne intérieure 5 en vue de permettre ou de faciliter le montage de ladite cage, notamment lors de la disposition des corps roulants 3 sur les cadres périphériques 7.

En outre, une telle déformation peut permettre de fiabiliser le fonctionnement du palier en limitant les contraintes sur la cage, notamment celles dues à des vitesses de rotation différentes des corps roulants 3, aux chocs et/ou aux vibrations desdits corps roulants sur ladite cage.

Les jonctions 10 en U présentent deux branches 10a, 10b qui forment une ouverture 11 orientée vers l'intérieur, les extrémités desdites branches étant reliées à respectivement un segment 5a. Les cadres périphériques 7 s'étendent sur la périphérie extérieure des ponts 6 et des segments 4a, 5a en limitant notamment les frottements des corps roulants 3 disposés sur lesdits cadres périphériques.

Dans le mode de réalisation représenté, chaque jonction 10 en U d'un pont 6 s'étend depuis l'extrémité intérieure dudit pont sur une dimension axiale qui est prolongée vers la couronne extérieure 4 par une partie centrale 6a dudit pont, ladite partie centrale reliant ladite jonction 10 en U à l'extrémité extérieure dudit pont. Chaque cadre périphérique 7 peut ainsi être formé sur la périphérie interne d'une découpe réalisée entre les parties centrales 6a et les segments 4a, 5a.

En particulier, la couronne intérieure 5 peut être déformable élastiquement entre un état initial de fonctionnement dans lequel les corps roulants 3 sont maintenus sur les cadres périphériques 7 pour leur mise en rotation sur les pistes de roulement 1a, 2a et un état déformé dans lequel le diamètre de la cage, notamment au niveau de ladite couronne intérieure, est augmenté ou réduit, pour favoriser le montage de ladite cage et/ou fiabiliser la retenue et la rotation desdits corps roulants en fonctionnement.

En particulier, les extrémités des branches 10a, 10b de chaque jonction 10 en U peuvent être écartées ou rapprochées pour permettre un débattement relatif des segments intérieurs 5a afin d'augmenter ou de réduire le diamètre de la couronne intérieure 5.

En outre, les segments intérieurs 5a peuvent être reliés entre eux par les extrémités des jonctions 10 en U afin de faciliter une déformation radiale desdits segments. En particulier, les segments intérieurs 5a peuvent être déformables depuis une configuration, par exemple bombée concave, permettant par exemple le montage de la cage, vers une configuration, par exemple bombée convexe, permettant la retenue des corps roulants 3 sur les cadres périphériques 7.

En relation avec la figure 3, les branches 10a, 10b des jonctions 10 en U forment un angle aigu entre elles, ledit angle pouvant varier par déformation selon la configuration de la couronne intérieure 5. Les segments intérieurs 5a s'étendent circonférentiellement en présentant un angle de liaison obtus avec les extrémités des branches 10a, 10b, cet agencement angulaire permettant de diminuer les risques d'amorce de rupture par exemple lors des chocs des corps roulants 3 sur les ponts 6 en fonctionnement.

Selon le mode de réalisation représenté, chaque pont 6 est intégralement nervuré en présentant une section en U s'étendant dans sa partie centrale 6a, depuis son extrémité intérieure jusqu'à son extrémité extérieure, permettant ainsi d'obtenir une cage de poids optimal. L'extrémité extérieure de chaque pont 6 présente ainsi une jonction 12 en U reliant les segments 4a correspondants.

Par ailleurs, la couronne extérieure 4 présente une paroi annulaire 13 à laquelle les extrémités extérieures des ponts 6 sont reliées. Afin de rigidifier la cage au niveau de la couronne extérieure 4 et ainsi favoriser sa résistance mécanique et donc la capacité de charge du palier, la paroi 13 s'étend radialement à partir des segments extérieurs 4a et les extrémités extérieures des ponts 6 sont encastrées dans ladite paroi.

L'élasticité de la couronne intérieure 5 combinée à la rigidification de la couronne extérieure 4 permet ainsi d'obtenir une cage conciliant une élasticité satisfaisante à une bonne résistance mécanique et un poids réduit, notamment en améliorant les propriétés d'absorption des chocs et des vibrations des corps roulants 3.

La cage peut être réalisée d'une seule pièce à partir d'un matériau métallique, notamment par emboutissage d'un feuillard métallique, telle une tôle en acier de fine épaisseur, puis découpe de matière entre les couronnes 4, 5 et les ponts 6 pour former les cadres périphériques 7. De façon avantageuse, l'épaisseur du feuillard est de l'ordre de 1/3 de l'épaisseur radiale de la cage, afin notamment de faciliter la découpe des cadres périphériques 7 et/ou favoriser la déformation de la couronne intérieure 5.

En outre, le feuillard métallique peut avoir subi un traitement de surface pour améliorer les performances de contact entre la cage et les corps roulants 3, notamment en réduisant les coefficients de frottement. En variante, la cage peut être réalisée par moulage d'un matériau polymère, notamment thermoplastique éventuellement chargé, favorisant sa déformation élastique sans perte de résistance mécanique.

Selon le mode de réalisation représenté, la cage est agencée pour pouvoir être montée dans un palier à roulement conique en ce que la couronne intérieure 5 est inscrite dans un diamètre qui est inférieur au diamètre dans lequel est inscrite la couronne extérieure 4. En variante, les couronnes 4, 5 peuvent présenter un même diamètre pour une utilisation dans un palier à roulement cylindrique.

En relation avec la figure 1, chacune des pistes de roulement 1a, 2a présente une portée axiale 14, 15 sur laquelle les corps roulants 3 sous la forme de rouleaux coniques sont en appui par l'intermédiaire de leur périphérie tronconique, ladite portée axiale s'étendant entre un bord extérieur et un bord intérieur en présentant une géométrie tronconique.

Le palier à roulement est dit inversé en ce que la bague extérieure 1 est équipée d'un collet 16 sous la forme d'un épaulement annulaire de matière qui est réalisé sur le côté extérieur de ladite bague extérieure. Selon le mode de réalisation représenté, la bague intérieure 2 est dépourvue de collet, la portée axiale 15 de la piste de roulement intérieure 1a débouchant de part et d'autre de ladite bague intérieure.

Le collet 16 permet notamment le maintien des rouleaux coniques 3 entre les pistes de roulement 1a, 2a, notamment lorsque le palier est soumis à des charges axiales et/ou radiales. En particulier, la présence du collet 16 sur la bague extérieure 1 induit, par rapport à un collet solidaire de la bague intérieure 2, une vitesse de glissement dudit collet qui est réduite, une meilleure lubrification grâce à la centrifugation sur le collet 16 et un risque de grippage repoussé.

Le collet 16 présente une portée radiale 17 de roulement sur laquelle les rouleaux coniques 3 sont en appui par l'intermédiaire d'une face latérale 18a, ladite portée radiale s'étendant entre un bord extérieur et un bord intérieur en présentant une géométrie tronconique, lesdits bords étant annulaires et le diamètre dudit bord extérieur étant supérieur au diamètre dudit bord intérieur.

Dans le mode de réalisation représenté, les cadres périphériques 7 de la cage sont disposés à l'intérieur d'un cône ayant les axes Y des rouleaux 3 comme génératrice. Ainsi, les rouleaux 3 sont maintenus en appui radial vers l'intérieur sur les cadres périphériques 7, les segments 4a, 5a de chaque couronne 4, 5 étant disposés en regard axial de respectivement une face latérale 18a, 18b d'un rouleau 3.

Avantageusement, les segments 5a de la couronne intérieure 5 sont inscrits, au moins au niveau de leur zone centrale, dans un diamètre maximal Dₘₐₓ qui est séparé du diamètre D du bord intérieur de la portée axiale intérieure 15 d'une cote C qui est telle que C ≤ 20% D. Une telle disposition de la cage permet de réduire la distance entre les rouleaux 3 et donc notamment de pouvoir conserver un nombre de rouleaux et donc une capacité de charge qui sont identiques à celui d'un palier à roulement conique standard.

En particulier, la cote C peut être telle que C ≤ 5% D. Par ailleurs, les segments intérieurs 5a peuvent être inscrits dans le diamètre maximal Dₘₐₓ. En variante, les bords des segments intérieurs 5a peuvent être relevés dans un diamètre qui est supérieur à Dₘₐₓ, seule la zone centrale desdits segments étant inscrite dans le diamètre Dₘₐₓ.

De façon avantageuse, l'encombrement de la cage dans l'espace de roulement conique est limité en prévoyant qu'au moins 80% du volume de matière de ladite cage soient disposés à l'intérieur du cône ayant les axes Y des rouleaux comme génératrice.

En relation avec la figure 1, la face interne 9 de chaque segment intérieur 5a est disposée en regard axial d'une face latérale 18b d'un rouleau 3 en présentant :
- un bord extérieur 9a présentant, au moins au niveau de sa zone centrale, le diamètre maximal Dₘₐₓ ;
- un bord intérieur 9b présentant, au moins au niveau de sa zone centrale, un diamètre minimal Dₘᵢₙ qui est supérieur ou égal au diamètre D du bord intérieur de la portée axiale intérieure 15.

En particulier, l'écart entre le diamètre minimal Dₘᵢₙ et le diamètre D peut être supérieur ou égal à 0,15 mm afin de garantir un jeu radial minimal de rotation entre la couronne intérieure 5 et la bague intérieure 2.

En outre, la face interne 8 de chaque segment extérieur 4a est disposée en regard axial de la face latérale 18a d'un rouleau 3. De façon avantageuse relativement à l'encombrement de la cage dans l'espace de roulement, chaque face interne 8 présente un bord extérieur disposé à l'intérieur du cône ayant les axes Y des rouleaux 3 comme génératrice.

Pour assembler un tel palier, en raison de la présence du collet 16 sur la bague extérieure 1, on prévoit d'abord de disposer les rouleaux 3 à l'intérieur de la piste de roulement 1a de ladite bague extérieure avant le montage de la bague intérieure 2, ladite bague intérieure étant ensuite montée dans ladite bague extérieure en disposant lesdits rouleaux sur la piste de roulement intérieure 2a.

Après disposition des rouleaux 3 à l'intérieur de la piste de roulement extérieure 1a, chaque rouleau 3 est disposé sur un cadre périphérique 7 afin de pouvoir bénéficier d'un ensemble bague extérieure 1 / rouleaux 3 / cage de rétention dont la cohésion est suffisante pour être manipulé avant et/ou pendant le montage de la bague intérieure 2.

En outre, avant montage de la bague intérieure 2, les segments 5a de la couronne intérieure 5 sont disposés par rapport aux faces latérales 18b des rouleaux 3 de sorte que, après montage de ladite bague intérieure, la zone centrale desdits segments soit inscrite dans le diamètre maximal Dₘₐₓ.

En particulier, la déformation de la cage de rétention permet de disposer chaque rouleau 3 sur un cadre périphérique 7 dans l'espace de roulement de sorte que, après ladite déformation, au moins la zone centrale des segments 5a de la couronne intérieure 5 soit inscrite dans le diamètre maximal Dₘₐₓ.

Selon une réalisation, la disposition de chaque rouleau 3 sur un cadre périphérique 7 comprend une translation axiale relative de la cage par rapport à la bague extérieure 1, ladite cage pouvant être déformée avant, lors et/ou après ladite translation. En particulier, lors de cette translation, les rouleaux 3 peuvent être maintenus contre la portée axiale 14 de la piste de roulement extérieure 1a à l'aide d'un outil.

La couronne intérieure 5 est déformable depuis une configuration permettant le passage de ladite couronne sous les rouleaux 3 et la disposition desdits rouleaux sur les cadres périphériques 7, vers une configuration permettant la retenue desdits rouleaux sur lesdits cadres périphériques.

En particulier, lors de la translation de la cage, la couronne intérieure 5 peut être déformée par appui sur les rouleaux 3, ladite couronne présentant un état contraint ayant un diamètre extérieur qui est suffisamment réduit pour permettre la disposition de chaque rouleau 3 sur un cadre périphérique 7. Ensuite, la disposition des segments intérieurs 5a en regard des faces latérales 18b des rouleaux 3 est réalisée par retour élastique de la couronne intérieure 5 après sa course d'appui afin que ladite couronne intérieure retrouve son diamètre nominal. Il en résulte un montage de la cage simplifié, tout en conservant les caractéristiques mécaniques de ladite cage.

En variante, éventuellement complémentaire, au moins les jonctions 10 en U et/ou les segments 5a de la couronne intérieure 5 peuvent être déformés mécaniquement et/ou thermiquement après la translation axiale de la cage afin d'augmenter le diamètre extérieur de ladite couronne intérieur, notamment pour inscrire les segments intérieurs 5a dans le diamètre maximal Dₘₐₓ requis. En particulier, la déformation peut être réalisée mécaniquement au moyen d'un outil de conformage.

Cette déformation des jonctions 10 en U et/ou des segments intérieurs 5a après la translation axiale permet notamment de limiter et/ou d'éviter la mise en traction de la couronne intérieure 5 sur sa course d'appui en translation sur les rouleaux 3 et donc de prévenir les risques d'amorce de rupture, notamment au niveau des extrémités desdites jonctions en U.

## Revendications

1. Cage de rétention de corps roulants (3) dans un palier à roulement, ladite cage présentant par rapport à un axe de rotation du palier une couronne extérieure (4) et une couronne intérieure (5) qui sont espacées axialement, une pluralité de ponts (6) s'étendant entre lesdites couronnes de sorte à former entre deux ponts (6) adjacents et un segment (4a, 5a) de chacune desdites couronnes un cadre périphérique (7) sur lequel un corps roulant (3) est retenu en pouvant tourner autour de son axe propre Y, les ponts (6) présentant une section en U au moins au niveau de leur extrémité intérieure, la couronne intérieure (5) étant formée d'une succession de segments (5a) reliés par des jonctions (10) en U, ladite cage étant **caractérisée en ce que** l'ouverture (11) desdites jonctions en U est orientée vers l'intérieur, les cadres périphériques (7) s'étendant sur la périphérie extérieure des ponts (6) et des segments (4a, 5a).

2. Cage de rétention selon la revendication 1, **caractérisée en ce que** chaque jonction (10) en U d'un pont (6) s'étend sur une dimension axiale qui est prolongée vers la couronne extérieure (4) par une partie centrale (6a) dudit pont, un cadre périphérique (7) étant formé sur la périphérie interne d'une découpe réalisée entre deux parties centrales (6a) adjacentes et les segments (4a, 5a) correspondants.

3. Cage de rétention selon l'une des revendications 1 ou 2, **caractérisée en ce que** les segments (5a) sont reliés entre eux par les extrémités des jonctions (10) en U afin de faciliter une déformation radiale desdits segments.

4. Cage de rétention selon la revendication 3, **caractérisée en ce que** les branches (10a, 10b) des jonctions (10) en U forment un angle aigu entre elles, les segments (5a) s'étendant circonférentiellement en présentant un angle de liaison obtus avec les extrémités desdites branches.

5. Cage de rétention selon l'une des revendications 3 ou 4, **caractérisée en ce que** la couronne intérieure (5) est déformable depuis une configuration de disposition des corps roulants (3) sur les cadres périphériques (7) vers une configuration de retenue desdits corps roulants sur lesdits cadres périphériques.

6. Cage de rétention selon l'une quelconque des revendications 1 à 5, **caractérisée en ce que** la couronne intérieure (5) est inscrite dans un diamètre qui est inférieur ou égal au diamètre dans lequel est inscrite la couronne extérieure (4).

7. Cage de rétention selon l'une quelconque des revendications 1 à 6, **caractérisée en ce que** les ponts (6) sont nervurés en présentant une section en U depuis leur extrémité intérieure jusqu'à leur extrémité extérieure.

8. Cage de rétention selon l'une quelconque des revendications 1 à 7, **caractérisée en ce que** la couronne extérieure (4) présente une paroi (13) à laquelle les extrémités extérieures des ponts (6) sont reliées.

9. Cage de rétention selon la revendication 8, **caractérisée en ce que** la paroi (13) s'étend radialement, les extrémités extérieures des ponts (6) étant encastrées dans ladite paroi.

10. Cage de rétention selon l'une quelconque des revendications 1 à 9, **caractérisée en ce qu'**elle est réalisée d'une seule pièce par emboutissage et découpe d'un feuillard métallique.

11. Palier à roulement comprenant une bague extérieure (1) et une bague intérieure (2) pourvues chacune d'une piste annulaire (1a, 2a) de roulement entre lesquelles sont disposés des corps roulants (3) de sorte à permettre la rotation relative desdites bagues autour d'un axe, chaque corps roulant (3) étant retenu sur un cadre périphérique (7) d'une cage de rétention selon l'une quelconque de revendications 1 à 10.

12. Palier à roulement selon la revendication 11, **caractérisé en ce que** les corps roulants (3) sont des rouleaux coniques, chacune des pistes de roulement (1a, 2a) présentant une portée axiale (14, 15) sur laquelle les rouleaux coniques sont en appui par l'intermédiaire de leur périphérie tronconique, lesdites portées axiales s'étendant chacune entre un bord extérieur et un bord intérieur en présentant une géométrie tronconique, la bague extérieure (1) étant équipée d'un collet (16) présentant une portée radiale (17) de roulement sur laquelle les rouleaux coniques sont en appui par l'intermédiaire d'une face latérale (18a).

13. Palier à roulement selon la revendication 12, **caractérisé en ce que** les segments (5a) de la couronne intérieure (5) sont inscrits, au moins au niveau de leur zone centrale, dans un diamètre maximal Dₘₐₓ qui est séparé du diamètre D du bord intérieur de la portée axiale intérieure (15) d'une cote C qui est telle que C ≤ 20% D.

## Patentansprüche

1. Rückhaltekäfig von rollenden Körpern (3) in einem Wälzlager, wobei der Käfig mit Bezug auf die Drehachse des Lagers eine äußere Krone (4) und eine innere Krone (5) aufweist, die axial beabstandet sind, eine Vielzahl von Brücken (6), die sich zwischen den Kronen derart erstrecken, dass sie zwischen zwei benachbarten Brücken (6) und einem Segment (4a, 5a) jeder der Kronen einen peripheren Rahmen (7) bilden, auf dem ein rollender Körper (3) zurückgehalten wird, indem er sich um seine eigene Achse Y drehen kann, wobei die Brücken (6) einen U-förmigen Abschnitt mindestens auf der Ebene ihres inneren Endes aufweisen, wobei die innere Krone (5) aus einer Aufeinanderfolge von Segmenten (5a) gebildet ist, die durch U-förmige Anschlüsse (10) verbunden sind, wobei der Käfig **dadurch gekennzeichnet ist, dass** die Öffnung (11) der U-förmigen Anschlüsse nach innen ausgerichtet ist, wobei sich die peripheren Rahmen (7) auf der äußeren Peripherie der Brücken (6) und der Segmente (4a, 5a) erstrecken.

2. Rückhaltekäfig nach Anspruch 1, **dadurch gekennzeichnet, dass** sich jede U-förmige Anschlüsse (10) einer Brücke (6) auf einer axialen Abmessung erstreckt, die hin zur äußeren Krone (4) durch einen zentralen Teil (6a) der Brücke verlängert ist, wobei ein peripherer Rahmen (7) auf der inneren Peripherie eines Ausschnitts gebildet ist, der zwischen zwei benachbarten zentralen Teilen (6a) und den entsprechenden Segmenten (4a, 5a) durchgeführt ist.

3. Rückhaltekäfig nach einem der Ansprüche 1 oder 2, **dadurch gekennzeichnet, dass** die Segmente (5a) untereinander durch die Enden der U-förmigen Anschlüssen (10) verbunden sind, um eine radiale Verformung der Segmente zu erleichtern.

4. Rückhaltekäfig nach Anspruch 3, **dadurch gekennzeichnet, dass** die Schenkel (10a, 10b) der U-förmigen Anschlüssen (10) zwischen sich einen spitzen Winkel bilden, wobei sich die Segmente (5a) auf dem Umfang erstrecken, indem sie einen stumpfen Anschlusswinkel mit den Enden der Schenkel bilden.

5. Rückhaltekäfig nach einem der Ansprüche 3 oder 4, **dadurch gekennzeichnet, dass** die innere Krone (5) aus einer Konfiguration der Anordnung der rollenden Körper (3) auf den peripheren Rahmen (7) hin zu einer Konfiguration des Rückhalts der rollenden Körper auf den peripheren Rahmen verformt werden kann.

6. Rückhaltekäfig nach einem der Ansprüche 1 bis 5, **dadurch gekennzeichnet, dass** die innere Krone (5) in einen Durchmesser eingeschrieben ist, der kleiner oder gleich dem Durchmesser ist, in den die äußere Krone (4) eingeschrieben ist.

7. Rückhaltekäfig nach einem der Ansprüche 1 bis 6, **dadurch gekennzeichnet, dass** die Brücken (6) Rippen sind, indem sie einen U-förmigen Abschnitt von ihrem inneren Ende bis zu ihrem äußeren Ende aufweisen.

8. Rückhaltekäfig nach einem der Ansprüche 1 bis 7, **dadurch gekennzeichnet, dass** die äußere Krone (4) eine Wand (13) aufweist, an die die äußeren Enden der Brücken (6) verbunden sind.

9. Rückhaltekäfig nach Anspruch 8, **dadurch gekennzeichnet, dass** sich die Wand (13) radial erstreckt, wobei die äußeren Enden der Brücken (6) in die Wand eingelassen sind.

10. Rückhaltekäfig nach einem der Ansprüche 1 bis 9, **dadurch gekennzeichnet, dass** er aus einem einzigen Stück durch Tiefziehen und Schneiden eines Metallbands durchgeführt ist.

11. Wälzlager, umfassend einen äußeren Ring (1) und einen inneren Ring (2), die jeweils mit einer ringförmigen Rollspur (1a, 2a) versehen sind, zwischen denen rollende Körper (3) derart angeordnet sind, dass sie die relative Drehung der Ringe um eine Achse ermöglichen, wobei jeder rollende Körper (3) auf einem peripheren Rahmen (7) eines Rückhaltekäfigs nach einem der Ansprüche 1 bis 10 zurückgehalten wird.

12. Wälzlager nach Anspruch 11, **dadurch gekennzeichnet, dass** die rollenden Körper (3) konische Rollen sind, wobei jede der Rollspuren (1a, 2a) einen axialen Bereich (14, 15) aufweist, auf dem die konischen Rollen mit Hilfe ihrer kegelstumpfartigen Peripherie aufliegen, wobei sich die axialen Bereiche jeweils zwischen einem äußeren Rand und einem inneren Rand erstrecken, indem sie eine kegelstumpfartige Geometrie aufweisen, wobei der äußere Ring (1) mit einer Muffe (16) ausgestattet ist, die einen radialen Rollbereich (17) aufweist, auf dem die konischen Rollen mit Hilfe einer lateralen Seite (18a) aufliegen.

13. Wälzlager nach Anspruch 12, **dadurch gekennzeichnet, dass** die Segmente (5a) der inneren Krone (5) mindestens auf dem Niveau ihrer zentralen Zone in einen maximalen Durchmesser Dₘₐₓ eingeschrieben sind, der vom Durchmesser D des inneren Rands des inneren axialen Bereichs (15) um eine Abmessung C getrennt ist, die C ≤ 20 % D ist.

## Claims

1. Cage for holding rolling bodies (3) in a roller bearing unit, said cage having in relation to a bearing rotating axis, an external crown (4) and an internal crown (5) which are spaced out axially, a plurality of bridges (6) extending between said crowns so as to form between two adjacent bridges (6) and a segment (4a, 5a) of each one of said crowns, a peripheral frame (7) whereon a rolling body (3) is held while being able to be turned around its own Y-axis, the bridges (6) having a U-shaped section at least at the level of their internal end, the internal crown (5) being formed by a succession of segments (5a) connected by U-shaped connections (10), said cage being **characterised in that** the opening (11) of said U-shaped connection is oriented towards the inside, the peripheral frames (7) extending over the external periphery of the bridges (6) and the segments (4a, 5a).

2. Holding cage according to claim 1, **characterised in that** each U-shaped connection (10) of a bridge (6) extends over an axial dimension which is extended towards the external crown (4) by a central part (6a) of said bridge, a peripheral frame (7) being formed over the internal periphery of a cut made between two adjacent central parts (6a) and the corresponding segments (4a, 5a).

3. Holding cage according to one of claims 1 or 2, **characterised in that** the segments (5a) are connected to each other by the ends of the connections (10) in order to facilitate a radial deformation of said segments.

4. Holding cage according to claims 3, **characterised in that** the segments (10a, 10b) of the U-shaped connections (10) form an acute angle between them, the segments (5a) extending circumferentially by having an obtuse connecting angle with the ends of said arms.

5. Holding cage according to one of claims 3 or 4, **characterised in that** the internal crown (5) is deformable from a configuration of positioning the rolling bodies (3) on the peripheral frames (7) towards a configuration of holding said rolling bodies on said peripheral frames.

6. Holding cage according to any one of claims 1 to 5, **characterised in that** the internal crown (5) is in line with a diameter which is less than or equal to the diameter wherein the external crown (4) is in line with.

7. Holding cage according to any one of claims 1 to 6, **characterised in that** the bridges (6) are ribbed by having a U-shaped section from their internal end up to their external end.

8. Holding cage according to any one of claims 1 to 7, **characterised in that** the external crown (4) has a wall (13) to which the external ends of the bridges (6) are connected.

9. Holding cage according to claim 8, **characterised in that** the wall (13) extends radially, the external ends of the bridges (6) being embedded in said wall.

10. Holding cage according to any one of claims 1 to 9, **characterised in that** it is connected from one single component by stamping and cutting a metal strip.

11. Roller bearing unit comprising an external ring (1) and an internal ring (2), each provided with a rolling collar step (1a, 2a) between which the rolling bodies (3) are positioned, so as to enable the relative rotation of said rings around an axis, each rolling body (3) being held on a peripheral frame (7) of a holding cage according to any one of claims 1 to 10.

12. Roller bearing unit according to claim 11, **characterised in that** the rolling bodies (3) are conical rollers, each one of the rolling steps (1a, 2a) having an axial width (14, 15) whereon the conical rollers are supported by the intermediary of their frustoconical periphery, said axial widths each extending between an external edge and an internal edge by having a frustoconical geometry, the external ring (1) being fitted with a collar (16) having a radial rolling width (17) whereon the conical rollers are supported by the intermediary of a lateral face (18a).

13. Roller bearing unit according to claim 12, **characterised in that** the segments (5a) of the internal crown (5) are in line with, at least at the level of their central zone, in a maximum diameter Dₘₐₓ which is separated from the diameter D of the internal edge of the bottom axial width (15) of a side C which is such as C ≤ 20% D.
